(19) Europäisches Patentamt
European Patent Office
Office européen des brevets

(11) Publication number : **0 484 123 A1**

(12) # EUROPEAN PATENT APPLICATION

(21) Application number : **91310006.1**

(51) Int. Cl.[5] : **C07F 7/18,** C08K 9/06

(22) Date of filing : **30.10.91**

(30) Priority : **01.11.90 JP 296933/90**

(43) Date of publication of application :
**06.05.92 Bulletin 92/19**

(84) Designated Contracting States :
**DE FR GB**

(71) Applicant : **SHIN-ETSU CHEMICAL CO., LTD.**
**6-1, Ohtemachi 2-chome**
**Chiyoda-ku Tokyo (JP)**

(72) Inventor : **Yanagisawa, Hideyoshi**
**21-1, Kokuga, Matsuida-machi**
**Usui-gun, Gunma-ken (JP)**
Inventor : **Yamaya, Masaaki**
**B-1-5, Kofu Apartment 787-2, Yanase**
**Annaka-shi, Gunma-ken (JP)**

(74) Representative : **Baverstock, Michael George Douglas et al**
**BOULT, WADE & TENNANT 27 Furnival Street**
**London, EC4A 1PQ (GB)**

(54) **Alkoxysilane compounds and their use as coupling agents.**

(57) A novel alkoxy silane has a silicon-based $C_6$ to $C_{14}$ long-chain alkyl group substituted at the ω-position by a halogen atom or an aminoalkyl-substituted amino group. The compounds having, in particular, the aminoalkyl-substituted amino group are useful as surface-treatment agents of silica fillers used as water-resistant reinforcing fillers in molding resin compositions.

EP 0 484 123 A1

The present invention relates to a novel organosilicon compound and, more particularly, to a novel alkoxysilane compound having a long-chain alkyl group substituted by a halogen atom or by an N-(aminoalkyl)amino group. The novel organosilicon compound is useful as a priming agent in the adhesive bonding of a variety of organic resins and a variety of inorganic materials as well as a modifying agent in composite materials consisting of an organic resin and an inorganic material dispersed therein.

The novel organosilicon compound of the invention is an alkoxysilane compound represented by the general formula

$$(R^1O)_mSi\,(CH_3)_{3-m}(R^2\text{-}Y), \qquad (I)$$

in which $R^1$ is a methyl, ethyl or vinyl group, $R^2$ is a divalent aliphatic hydrocarbon group having 6 to 14 carbon atoms free from unsaturation, Y is a substituent atom or group selected from the class consisting of halogen atoms and aminoalkyl-substituted amino groups, of which the aminoalkyl group has 2 to 6 carbon atoms, and the subscript m is 1, 2 or 3.

In the drawings:

Figure 1 and Figure 2 are an infrared absorption spectrum and an $^1$H-NMR spectrum, respectively, of the inventive compound prepared in Example 1.

It is known that alkoxysilanes having an alkyl group substituted by a halogen atom, an aminoalkyl group or an N-aminoalkyl-substituted aminoalkyl group are useful, for example, as priming agents in adhesive bonding between a variety of organic resins and a variety of inorganic materials, as a modifying agent in composite materials consisting of an organic resin and an inorganic material dispersed therein, a surface-modifying agent for inorganic materials, a modifying agent for organic resins, a polymerization initiator or a polymerization terminator, and an intermediate for the synthesis of various kinds of other organosilicon compounds.

Examples of known alkoxy silane compounds of this type include, for example, 3-chloropropyl trimethoxy silane, 3-chloropropyl triethoxy silane, 3-chloropropyl methyl dimethoxy silane, 3-chloropropyl dimethyl methoxy silane, 3-bromopropyl trimethoxy silane, chloromethyl trimethoxy silane, chloromethyl dimethyl methoxy silane, 2-(4-chloromethylphenyl)ethyl trimethoxy silane, and 3-chloro-2-methylpropyl trimethoxy silane as well as 3-aminopropyl trimethoxy silane, 3-aminopropyl triethoxy silane, N-(2-aminoethyl)-3-aminopropyl trimethoxy silane, 3-aminopropyl methyl dimethoxy silane, 3-aminopropyl methyl diethoxy silane, 3-aminopropyl dimethyl methoxy silane, N-(2-aminoethyl)-3-aminopropyl methyl dimethoxy silane and (2-aminoethylaminomethyl)phenethyl trimethoxy silane.

A characteristic feature in these known compounds is that the number of carbon atoms in the saturated divalent aliphatic group linking the halogen atom or the amino group and the silicon atom is always 5 or less. The advantages obtained by using these known compounds in the above described applications are however not always wholly satisfactory.

The novel organosilicon compound of the present invention is represented by the above stated general formula (I), in which each symbol has the meaning as defined above. When the symbol Y denotes a halogen atom, the halogen is preferably chlorine or bromine. Alternatively, the symbol Y denotes an aminoalkyl-substituted amino group represented by the general formula

$$-NH-(CH_2)_n-NH_2\,, \qquad \cdots\cdots \quad (II)$$

in which the subscript n is an integer of 2 to 6. In formula (I), the symbol $R^1$ denotes a monovalent hydrocarbon group having 1 or 2 carbon atoms, exemplified by methyl, ethyl and vinyl groups or, in particular, methyl and ethyl groups. The symbol $R^2$ denotes a divalent aliphatic hydrocarbon group free from unsaturation and having 6 to 14 carbon atoms, exemplified by the groups expressed by the formulae:

$-(CH_2)_6-$, $-CH(CH_3)-(CH_2)_4-$, $-(CH_2)_7-$, $-CH(CH_3)-(CH_2)_5-$, $-(CH_2)_8-$, $-CH(CH_3)-(CH_2)_6-$, $-(CH_2)_9-$, $-CH(CH_3)-(CH_2)_7-$, $-(CH_2)_{10}-$, $-CH(CH_3)-(CH_2)_8-$, $-(CH_2)_{11}-$, $-CH(CH_3)-(CH_2)_9-$, $-(CH_2)_{12}-$, $-CH(CH_3)-(CH_2)_{10}-$, $-(CH_2)_{13}-$, $-CH(CH_3)-(CH_2)_{11}-$, $-(CH_2)_{14}-$, $-CH(CH_3)-(CH_2)_{12}-$.

The symbol Y denotes a halogen atom which is preferably an atom of chlorine or bromine as mentioned above. The subscripts m and n are each a positive integer of 1, 2 or 3 and 2 to 6, respectively.

Examples of the inventive novel organosilicon compounds include those expressed by the following formulae:

$(CH_3O)_3Si(CH_2)_6Cl$, $(CH_3O)_3Si(CH_2)_6Br$,
$(CH_3O)_3Si(CH_2)_8Cl$, $(CH_3O)_3Si(CH_2)_8Br$,
$(CH_3O)_3Si(CH_2)_{10}Cl$, $(CH_3O)_3Si(CH_2)_{10}Br$,
$(CH_3O)_3Si(CH_2)_{12}Cl$, $(CH_3O)_3Si(CH_2)_{12}Br$,
$(CH_3O)_3Si(CH_2)_{14}Cl$, $(CH_3O)_3Si(CH_2)_{14}Br$,
$(CH_3CH_2O)_3Si(CH_2)_6Br$, $(CH_3CH_2O)_3Si(CH_2)_8Br$,
$(CH_3CH_2O)_3Si(CH_2)_{10}Br$, $(CH_3CH_2O)_3Si(CH_2)_{12}Br$,

$(CH_3CH_2O)_3Si(CH_2)_{14}Br$, $(CH_3O)_2(CH_3)Si(CH_2)_6Cl$,
$(CH_3O)_2(CH_3)Si(CH_2)_6Br$, $(CH_3CH_2O)_2(CH_3)Si(CH_2)_{10}Cl$,
$(CH_3CH_2O)_3(CH_3)Si(CH_2)_{10}Br$, $(CH_3CH_2O)_3(CH_3)Si(CH_2)_8Br$,
$(CH_3O)(CH_3)_2Si(CH_2)_6Br$, $(CH_3CH_2O)(CH_3)_2Si(CH_2)_{10}Br$,
$(CH_3O)(CH_3)_2Si(CH_2)_{14}Cl$, $(CH_3O)_3 Si(CH_2)_{10}NH(CH_2)_2NH_2$,
$(CH_3O)_3Si(CH_2)_{10}NH(CH_2)_4NH_2$,
$(CH_3O)_3Si(CH_2)_{10}NH(CH_2)_6NH_2$,
$(CH_3O)_2(CH_3)Si(CH_2)_{10}NH(CH_2)_2NH_2$,
$(CH_3O)_2(CH_3)Si(CH_2)_{10}NH(CH_2)_4NH_2$,
$(CH_3O)_2(CH_3)Si(CH_2)_{10}NH(CH_2)_6NH_2$,
$(CH_3O)(CH_3)_2Si(CH_2)_{10}NH(CH_2)_2NH_2$,
$(CH_3O)(CH_3)_2Si(CH_2)_{10}NH(CH_2)_4NH_2$,
$(CH_3O)(CH_3)_2Si(CH_2)_{10}NH(CH_2)_6NH_2$,
$(CH_3O)_3Si(CH_2)_6NH(CH_2)_2NH_2$,
$(CH_3O)_3Si(CH_2)_6NH(CH_2)_4NH_2$,
$(CH_3O)_3Si(CH_2)_6NH(CH_2)_6NH_2$,
$(CH_3O)_2(CH_3)Si(CH_2)_6NH(CH_2)_2NH_2$,
$(CH_3O)_2(CH_3)Si(CH_2)_6NH(CH_2)_4NH_2$,
$(CH_3O)_2(CH_3)Si(CH_2)_6NH(CH_2)_6NH_2$,
$(CH_3O)(CH_3)_2Si(CH_2)_6NH(CH_2)_2NH_2$,
$(CH_3O)(CH_3)_2Si(CH_2)_6NH(CH_2)_4NH_2$,
$(CH_3O)(CH_3)_2Si(CH_2)_6NH(CH_2)_6NH_2$,
$(CH_3O)_3Si(CH_2)_{14}NH(CH_2)_2NH_2$,
$(CH_3O)_3Si(CH_2)_{14}NH(CH_2)_4NH_2$,
$(CH_3O)_3Si(CH_2)_{14}NH(CH_2)_6NH_2$,
$(CH_3O)_2(CH_3)Si(CH_2)_{14}NH(CH_2)_2NH_2$,
$(CH_3O)_2(CH_3)Si(CH_2)_{14}NH(CH_2)_6NH_2$,
$(CH_3O)(CH_3)_2Si(CH_2)_{14}NH(CH_2)_2NH_2$,
$(CH_3O)(CH_3)_2Si(CH_2)_{14}NH(CH_2)_6NH_2$,
$(CH_3O)_3Si(CH_2)_8NH(CH_2)_2NH_2$,
$(CH_3O)_3Si(CH_2)_8NH(CH_2)_6NH_2$,
$(CH_3O)_2(CH_3)Si(CH_2)_8NH(CH_2)_2NH_2$,
$(CH_3O)_2(CH_3)Si(CH_2)_8NH(CH_2)_6NH_2$,
$(CH_3O)(CH_3)_2Si(CH_2)_8NH(CH_2)_2NH_2$,
$(CH_3O)(CH_3)_2Si(CH_2)_8NH(CH_2)_6NH_2$,
$(CH_3O)_3Si(CH_2)_{12}NH(CH_2)_2NH_2$,
$(CH_3O)_3Si(CH_2)_{12}NH(CH_2)_6NH_2$,
$(CH_3O)_2(CH_3)Si(CH_2)_{12}NH(CH_2)_2NH_2$,
$(CH_3O)_2(CH_3)Si(CH_2)_{12}NH(CH_2)_6NH_2$,
$(CH_3O)(CH_3)_2Si(CH_2)_{12}NH(CH_2)_2NH_2$,
$(CH_3O)(CH_3)_2Si(CH_2)_{12}NH(CH_2)_6NH_2$,
$(CH_3CH_2O)_3Si(CH_2)_{10}NH(CH_2)_2NH_2$,
$(CH_3CH_2O)_3Si(CH_2)_{10}NH(CH_2)_6NH_2$,
$(CH_3CH_2O)_2(CH_3)Si(CH_2)_{10}NH(CH_2)_2NH_2$,
$(CH_3CH_2O)(CH_3)_2Si(CH_2)_{10}NH(CH_2)_2NH_2$,
$(CH_3CH_2O)_3Si(CH_2)_6NH(CH_2)_2NH_2$,
$(CH_3CH_2O)_2(CH_3)Si(CH_2)_6NH(CH_2)_4NH_2$,
$(CH_3CH_2O)(CH_3)_2Si(CH_2)_6NH(CH_2)_6NH_2$,
$(CH_3CH_2O)_3Si(CH_2)_{14}NH(CH_2)_2NH_2$,
$(CH_3CH_2O)_2(CH_3)Si(CH_2)_{14}NH(CH_2)_6NH_2$,
$(CH_3CH_2O)_3Si(CH_2)_8NH(CH_2)_2NH_2$,
$(CH_3CH_2O)_3Si(CH_2)_{12}NH(CH_2)_2NH_2$.

Following is a description of a method for the synthetic preparation of the above defined and exemplified compounds of the invention.

The starting organosilicon compound for the synthesis is an alkoxy hydrogensilane represented by the general formula

$$(R^1 O)_m SiH (CH_3)_{3-m}, \qquad (III)$$

in which each symbol has the same meaning as defined hereinbefore. This compound is subjected to a hydrosilation reaction with an ethylenically $\alpha$-unsaturated compound represented by the general formula

$$CH_2=CH-R^3-Y, \quad (IV)$$

in which Y has the same meaning as defined hereinbefore and $R^3$ is an aliphatic divalent hydrocarbon group free from unsaturation having 4 to 12 carbon atoms, in the presence of a catalytic amount of a catalyst compound which can be a compound of a transition metal of the Group VIII of the Periodic Table, such as platinum, rhodium, ruthenium, nickel, or cobalt, in particular, platinum. The reaction can be performed by mixing the reactants and the catalyst and heating the mixture at a temperature of 30 to 150 °C for 30 minutes to 18 hours.

The reaction mixture can be diluted, if necessary, with an organic solvent which is, though not particularly limitative, exemplified by aromatic hydrocarbon solvents such as benzene, toluene and xylene, aliphatic hydrocarbon solvents such as pentane, hexane, heptane, octane, nonane and decane, ethers such as diethyl ether, tetrahydrofuran and dioxane, ketones such as acetone, methyl ethyl ketone and methyl isobutyl ketone, alcohols such as methyl alcohol and ethyl alcohol, halogenated aliphatic hydrocarbon solvents such as perchloroethane, perchloroethylene, trichloroethane, chloroform and carbon tetrachloride, amides such as dimethylformamide, and esters such as methyl acetate, ethyl acetate and isopropyl acetate.

Alternatively, the compound of the invention can be prepared by first subjecting a chloro hydrogensilane compound represented by the general formula

$$Cl_mSiH(CH_3)_{3-m}, \quad (V)$$

in which the symbol m has the same meaning as defined above, to a hydrosilation reaction with the unsaturated compound of the formula (IV) stated above under substantially the same reaction conditions described above to give a compound of the formula

$$Cl_mSi(CH_3)_{3-m}(CH_2-CH_2-R^3-Y), \quad (VI)$$

which is then subjected to a dehydrochlorination condensation reaction with an alcohol represented by the general formula

$$R^1OH,$$

in which $R^1$ has the same meaning as defined above, by heating the reaction mixture at a temperature of 20 to 150 °C for 30 minutes to 18 hours in the presence of an acid acceptor. The reactions in this synthesis route can be performed by diluting the reactants with an organic solvent which can be exemplified by those given as the examples of the solvent to be used in the first synthesis route.

The above mentioned acid acceptor of the hydrogen chloride is exemplified by tertiary amines such as triethyl amine, trimethyl amine, amino compounds such as urea
and alkali alcoholates such as sodium methoxide and sodium ethoxide.

When the substituent group denoted by Y in the inventive,compound is an aminoalkyl-substituted amino group of the formula $-NH-(CH_2)_n-NH_2$, the compound can be synthesized by the synthetic route described below. Thus, the compound of the invention in which Y is a halogen atom as represented by the general formula

$$(R^1O)_mSi(CH_3)_{3-m}(R^2-X), \quad (VII)$$

in which X is a halogen atom, in particular chlorine, may be synthesized according to the above described method and this compound is then subjected to a dehydrohalogenation reaction with an alkylenediamine compound represented by the general formula

$$NH_2-(CH_2)_n-NH_2, \quad (VIII)$$

in which n is an integer of 2 to 6. The molar ratio of the silane compound of formula (VII) and the alkylenediamine of formula (VIII) should be at least 0.5 or, preferably, at least 1.0. The reaction is usually complete within 30 minutes to 18 hours at a temperature of 50 to 150 °C.

The above mentioned dehydrohalogenation reaction should be performed in the presence of an acid acceptor. Although any of the acceptor compounds of which examples are given earlier serve the purpose, it is sometimes convenient to use the alkylenediamine compound of formula (VIII) in an excess amount so that the excess of this diamine compound serves as the acid acceptor. Of course this dehydrohalogenation reaction may be performed by diluting the reactants with an organic solvent which can be exemplified by those previously given as examples of the solvent used in the synthesis of the compound in which Y is a halogen atom.

In the following, description examples are given of the synthesis and characterization of novel alkoxysilane compounds according to the invention.

Example 1.

Into a flask of 1 liter capacity equipped with a stirrer, thermometer, reflux condenser and dropping funnel were introduced 219 g (1 mole) of 10-bromo-1-decene and 0.1 g of an isopropyl alcohol solution of chloroplatinic acid in a concentration of 2% by weight of platinum. 128.7 g (0.95 mole) of trichlorosilane were then gradually added dropwise into the mixture in the flask under a stream of nitrogen gas at such a rate that the temperature of the reaction mixture in the flask was kept at a temperature in the range from 45 to 60 °C. After completion

of the dropwise addition of the trichlorosilane, the reaction mixture was further agitated for two hours at 60 °C.

180 g (3 moles) of urea were then added to the reaction mixture and then 128 g (4 moles) of methyl alcohol were gradually added thereto dropwise at such a rate that the temperature of the reaction mixture was kept at 50 to 65 °C. After completion of the dropwise addition of methyl alcohol, the reaction mixture was further agitated for 2 hours at 60 °C.

The reaction mixture was separated into two layers upon standing, the lower layer was discarded and the organic solution in the upper layer was taken and concentrated by evaporation at 80 °C under a pressure of 10 mm Hg so that 330 g of a clear, light brown liquid was obtained as a crude product.

The crude liquid product obtained was subjected to purification by distillation to obtain 276 g of a fraction boiling at 160 to 162 °C under a pressure of 3 mm Hg as a clear, colorless liquid. This liquid product could be identified to be 10-bromodecyl trimethoxy silane from the analytical results shown below obtained by infrared absorption spectrophotometric analysis, NMR spectrometric analysis and elemental analysis. The purity of the product relative to the compound was 98.3% according to the result of the gas chromatographic analysis. The above mentioned yield of the compound corresponds to 85.2% of the theoretical value.

Result of elemental analysis

| | C | H | Si | Br |
|---|---|---|---|---|
| Calculated, % | 45.74 | 8.56 | 8.23 | 23.41 |
| Found, % | 45.51 | 8.47 | 8.34 | 23.56 |

Infrared absorption spectrum (see Figure 1)

1082 and 1192 $cm^{-1}$ : Si-O-C
1462, 2841 and 2946 $cm^{-1}$ : C-H
563 $cm^{-1}$ : C-Br

$^1$H-NMR spectrum (see Figure 2)

(internal standard, benzene, δ = 7.24 ppm)

δ = 3.45 ppm (s, 9H) : Si-OC$\underline{H}_3$
δ = 0.30 - 0.70 ppm (m, 2H) : Si-C$\underline{H}_2$-
δ = 1.10 - 1.52 ppm (m, 14H) : Si-CH$_2$-(C$\underline{H}_2$)$_7$-CH$_2$-CH$_2$-Br
δ = 1.52 - 2.10 ppm (m, 2H) : C$\underline{H}_2$-CH$_2$-Br
δ = 3.33 ppm (t, 2H) : CH$_2$-C$\underline{H}_2$-Br

Example 2.

The synthetic procedure was substantially the same as in Example 1 except for replacement of the 219 g of 10-bromo-1-decene with 162.9 g (1 mole) of 6-bromo-1-hexene, the 128.7 g of trichlorosilane with 109.3 g (0.95 mole) of methyl dichlorosilane and the 128 g of methyl alcohol with 184 g (4 moles) of ethyl alcohol. The reaction mixture after completion of the reaction was concentrated by evaporation under a pressure of 10 mm Hg at 80 ° C to give 245 g of a clear, light brown liquid as a crude product which was then subjected to distillation to give 204.7 g of a clear, colorless liquid fraction boiling at 104 to 108 °C under a pressure of 3 mm Hg as a final product.

This liquid product was identified to be methyl diethoxy 6-bromohexyl silane from the analytical results shown below obtained by infrared absorption spectrophotometric analysis, NMR spectrometric analysis and elemental analysis. The purity of the product relative to the compound was 98.5% according to the result of the gas chromatographic analysis. The above mentioned yield of the compound corresponds to 72.6% of the theoretical value.

Result of elemental analysis

| | C | H | Si | Br |
|---|---|---|---|---|
| Calculated, % | 44.44 | 8.48 | 9.45 | 26.88 |
| Found, % | 44.15 | 8.32 | 9.50 | 27.01 |

Infrared absorption spectrum

952, 1079, 1107, 1165 and 1390 $cm^{-1}$ : $Si-O-CH_2-CH_3$
1260 $cm^{-1}$ : $Si-CH_3$
1461, 2863 and 2972 $cm^{-1}$ : C-H
563 $cm^{-1}$ : C-Br

$^1H$-NMR spectrum
(internal standard, benzene, $\delta$ = 7.24 ppm)
$\delta$ = 0.00 ppm (s, 3H) : $Si-C\underline{H}_3$
$\delta$ = 1.15 ppm (t, 6H) : $Si-OCH_2-C\underline{H}_3$
$\delta$ = 3.68 ppm (q, 4H) : $Si-OC\underline{H}_2-CH_3$
$\delta$ = 0.30 - 0.70 ppm (m, 2H) : $Si-C\underline{H}_2-(CH_2)_3-CH_2-CH_2-Br$
$\delta$ = 1.00 - 1.70 ppm (m, 6H) : $Si-CH_2-(C\underline{H}_2)_3-CH_2-CH_2-Br$
$\delta$ = 1.70 - 2.15 ppm (m, 2H) : $Si-CH_2-(CH_2)_3-C\underline{H}_2-CH_2-Br$
$\delta$ = 3.33 ppm (t, 2H) : $Si-CH_2(CH_2)_3-CH_2-C\underline{H}_2-Br$

Example 3.

The reaction procedure was substantially the same as in Example 1 except for replacement of 219 g of 10-bromo-1-decene with 230.5 g (1 mole) of 14-chloro-1-tetradecene and 128.7 g of trichlorosilane with 89.8 g (0.95 mole) of dimethyl chlorosilane. The reaction mixture after completion of the reaction was concentrated by evaporation under a pressure of 3 mm Hg at 120 ° C to give 264 g of a clear, light yellow liquid. The purity of this liquid product was 94.7% according to the result of the gas chromatographic analysis.

This liquid product could be identified to be dimethyl methoxy 14-chlorotetradecyl silane from the analytical results shown below obtained by infrared absorption spectrophotometric analysis, NMR spectrometric analysis and elemental analysis. The above mentioned yield of the compound corresponds to 82.4% of the theoretical value.

Result of elemental analysis

| | C | H | Si | Cl |
|---|---|---|---|---|
| Calculated, % | 63.61 | 11.62 | 8.75 | 11.04 |
| Found, % | 63.42 | 11.53 | 8.79 | 11.15 |

Infrared absorption spectrum
1090, and 1187 $cm^{-1}$ : $Si-O-CH_3$
1255 $cm^{-1}$ : $Si-CH_3$
1458, 2887 and 2959 $cm^{-1}$ : C-H
600 $cm^{-1}$ : C-Cl

$^1H$-NMR spectrum
(internal standard, benzene, $\delta$ = 7.24 ppm)
$\delta$ = 0.00 ppm (s, 6H) : $Si-C\underline{H}_3$
$\delta$ = 3.40 ppm (s, 3H) : $Si-O-C\underline{H}_3$
$\delta$ = 0.30 - 0.70 ppm (m, 2H) : $Si-C\underline{H}_2-(CH_2)_{11}-CH_2-CH_2-Cl$
$\delta$ = 1.10 - 1.57 ppm (m, 22H) : $Si-CH_2-(C\underline{H}_2)_{11}-CH_2-CH_2-Cl$
$\delta$ = 1.57 - 2.10 ppm (m, 2H) : $Si-CH_2-(CH_2)_{11}-C\underline{H}_2-CH_2-Cl$
$\delta$ = 3.33 ppm (t, 2H) : $Si-CH_2(CH_2)_{11}-CH_2-C\underline{H}_2-Cl$

Example 4.

The reaction procedure was substantially the same as in Example 2 except for replacement of 6-bromo-1-hexene with 118.5 g (1 mole) of 6-chloro-1-hexene. The reaction mixture after completion of the reaction was concentrated by evaporation under a pressure of 10 mm Hg at 80 ° C to give 243.0 g of a clear, light brown liquid as a crude product which was then subjected to distillation to give 184.3 g of a clear, colorless fraction boiling at 47 to 101 °C under a pressure of 6 mm Hg as a final product.

This liquid product was identified to be methyl diethoxy 6-chlorohexyl silane from the analytical results

shown below obtained by infrared absorption spectrophotometric analysis, NMR spectrometric analysis and elemental analysis. The purity of the product relative to the compound was 99.3% according to the result of the gas chromatographic analysis. The above mentioned yield of the compound corresponds to 73.0% of the theoretical value.

Result of elemental analysis

| | C | H | Si | Cl |
|---|---|---|---|---|
| Calculated, % | 52.25 | 9.97 | 11.11 | 14.02 |
| Found, % | 52.07 | 9.82 | 11.30 | 14.15 |

Infrared absorption spectrum

| | |
|---|---|
| 952, 1079, 1108, 1167 and 1390 $cm^{-1}$ | : $Si-O-CH_2CH_3$ |
| 1261 $cm^{-1}$ | : $Si-CH_3$ |
| 1461, 2867 and 2976 $cm^{-1}$ | : C-H |
| 600 $cm^{-1}$ | : C-Cl |

$^1$H-NMR spectrum
(internal standard, benzene, δ = 7.24 ppm)

| | |
|---|---|
| δ = 0.00 ppm (s, 3H) | : $Si-C\underline{H}_3$ |
| δ = 1.13 ppm (t, 6H) | : $Si-O-CH_2-C\underline{H}_3$ |
| δ = 3.70 ppm (q, 4H) | : $Si-O-C\underline{H}_2-CH_3$ |
| δ = 0.30 - 0.70 ppm (m, 2H) | : $Si-C\underline{H}_2-(CH_2)_3-CH_2-CH_2-Cl$ |
| δ = 1.05 - 1.70 ppm (m, 6H) | : $Si-CH_2-(C\underline{H}_2)_3-CH_2-CH_2-Cl$ |
| δ = 1.70 - 2.10 ppm (m, 2H) | : $Si-CH_2-(CH_2)_3-C\underline{H}_2-CH_2-Cl$ |
| δ = 3.37 ppm (t, 2H) | : $Si-CH_2(CH_2)_3-CH_2-C\underline{H}_2-Cl$ |

Example 5.

Into a flask of 2 liter capacity equipped with a stirrer, thermometer, reflux condenser and dropping funnel were introduced 540 g (4 moles) of ethylenediamine and then 341.4 g (1 mole) of 10-bromodecyl trimethoxy silane were gradually added dropwise into the flask under a stream of nitrogen gas at such a rate that the temperature of the reaction mixture in the flask was kept at a temperature in the range from 70 to 80 °C. After completion of the dropwise addition of the silane, the reaction mixture was further agitated for five hours at 80 °C.

193 g of a methyl alcohol solution containing 1 mole of sodium methoxide were then added dropwise to the reaction mixture at 60 °C followed by continued agitation of the mixture at 60 °C for 1 hour.

The reaction mixture was filtered to remove the precipitates of sodium bromide formed by the dehydrobromination reaction and the filtrate was concentrated by evaporation at 120 °C under a pressure of 3 mm Hg so that 242.4 g of a clear, brown liquid were obtained.

The above obtained liquid product was identified as N-(2-aminoethyl)-10-aminodecyl trimethoxy silane from the analytical results shown below obtained by infrared absorption spectrophotometric analysis, NMR spectrometric analysis and elemental analysis. The amine equivalent of this liquid product as determined by neutralization titration with hydrochloric acid was 161.0 g/mole which was in good concordance with the theoretical value of 160.75 g/mole. The above mentioned yield of this product compound corresponds to 75.4% of the theoretical value.

Result of elemental analysis

| | C | H | Si | N |
|---|---|---|---|---|
| Calculated, % | 56.21 | 11.32 | 8.76 | 8.74 |
| Found, % | 56.09 | 11.13 | 8.88 | 8.82 |

Infrared absorption spectrum

| | |
|---|---|
| 1090, 1192 and 2854 $cm^{-1}$ | : $Si\text{-}O\text{-}CH_3$ |
| 1471, 2854 and 2924 $cm^{-1}$ | : C-H |
| 1597 $cm^{-1}$ | : C-N |
| 3319 $cm^{-1}$ | : N-H |

$^1$H-NMR spectrum
(internal standard, benzene, $\delta$ = 7.24 ppm)

| | |
|---|---|
| $\delta$ = 3.48 ppm (s, 9H) | : $Si\text{-}O\text{-}C\underline{H}_3$ |
| $\delta$ = 0.25 - 0.75 ppm (m, 2H) | : $Si\text{-}C\underline{H}_2\text{-}(CH_2)_8\text{-}CH_2$ |
| $\delta$ = 0.75 - 1.75 ppm (m, 19H) | : $Si\text{-}CH_2\text{-}(C\underline{H}_2)_8\text{-}CH_2N\underline{H}\text{-}(CH_2)_2\text{-}N\underline{H}_2$ |
| $\delta$ = 2.25 - 2.90 ppm (m, 6H) | : $Si\text{-}CH_2\text{-}(CH_2)_8\text{-}C\underline{H}_2\text{-}NH\text{-}(C\underline{H}_2)_2\text{-}NH_2$ |

Example 6.

The synthetic procedure was substantially the same as in Example 5 except for the use of 1044 g (9 moles) of hexamethylenediamine in place of ethylenediamine and 297.3 g (1 mole) of 6-bromohexyl methyl diethoxy silane in place of 10-bromodecyl trimethoxy silane. The reaction mixture after completion of the reaction was filtered to remove the precipitates and the filtrate was concentrated by evaporation under a pressure of 3 mm Hg at 180 ° C to give 273.6 g of a clear, brown liquid as a product.

This liquid product was identified as methyl diethoxy N-(6-aminohexyl)-6-aminohexyl silane from the analytical results shown below obtained by infrared absorption spectrophotometric analysis, NMR spectrometric analysis and elemental analysis. The purity of the product relative to the compound was 94.7% according to the result of the gas chromatographic analysis. The above mentioned yield of the compound corresponds to 82.3% of the theoretical value.

Result of elemental analysis

| | C | H | Si | N |
|---|---|---|---|---|
| Calculated, % | 61.39 | 12.12 | 8.44 | 8.42 |
| Found, % | 61.18 | 12.01 | 8.49 | 8.52 |

Infrared absorption spectrum

| | |
|---|---|
| 953, 1080, 1107, 1165 and 1390 $cm^{-1}$ | : $Si\text{-}O\text{-}CH_2CH_3$ |
| 1470, 2854 and 2924 $cm^{-1}$ | : C-H |
| 1596 $cm^{-1}$ | : C-N |
| 3320 $cm^{-1}$ | : N-H |

$^1$H-NMR spectrum
(internal standard, benzene, $\delta$ = 7.24 ppm)

| | |
|---|---|
| $\delta$ = 0.00 ppm (s, 3H) | : $Si\text{-}C\underline{H}_3$ |
| $\delta$ = 1.13 ppm (t, 6H) | : $Si\text{-}O\text{-}CH_2\text{-}C\underline{H}_3$ |
| $\delta$ = 3.75 ppm (q, 4H) | : $Si\text{-}O\text{-}C\underline{H}_2\text{-}CH_3$ |
| $\delta$ = 0.23 - 0.70 ppm (m, 2H) | : $Si\text{-}C\underline{H}_2\text{-}(CH_2)_4\text{-}CH_2\text{-}NH$ |
| $\delta$ = 0.70 - 1.77 ppm (m, 19H) | : $Si\text{-}CH_2\text{-}(C\underline{H}_2)_4\text{-}CH_2\text{-}NH$ <br> $NH\text{-}CH_2\text{-}(C\underline{H}_2)_4\text{-}CH_2\text{-}NH_2$ <br> $N\underline{H}\text{-}CH_2\text{-}(CH_2)_4\text{-}CH_2\text{-}N\underline{H}_2$ |
| $\delta$ = 2.20 - 2.88 ppm (m, 6H) | : $Si\text{-}CH_2\text{-}(CH_2)_4\text{-}C\underline{H}_2\text{-}NH\text{-}CH_2\text{-}(CH_2)_4\text{-}C\underline{H}_2\text{-}NH_2$ |

Example 7.

The synthetic procedure was substantially the same as in Example 5 except for the use of 792 g (9 moles) of tetramethylenediamine in place of ethylenediamine and 321.0 g (1 mole) of 14-chlorotetradecyl dimethyl methoxy silane in place of 10-bromodecyl trimethoxy silane. The reaction mixture after completion of the reaction was filtered to remove the precipitates of sodium chloride and the filtrate was concentrated by evaporation

under a pressure of 3 mm Hg at 150 °C to give 297.0 g of a clear, brown liquid as a product.

This liquid product was identified as dimethyl methoxy N-(4-aminobutyl)-14-aminotetradecyl silane from the analytical results shown below obtained by infrared absorption spectrophotbmetric analysis, NMR spectrometric analysis and elemental analysis. The amine equivalent of this liquid product as determined by neutralization titration with hydrochloric acid was 187.1 g/mole which was in good concordance with the theoretical value of 186.4 g/mole. The above mentioned yield of the compound corresponds to 79.8% of the theoretical value.

Result of elemental analysis

| | C | H | Si | N |
|---|---|---|---|---|
| Calculated, % | 67.88 | 12.98 | 7.54 | 7.52 |
| Found, % | 67.55 | 12.81 | 7.64 | 7.60 |

Infrared absorption spectrum

1090, 1191 and 2856 $cm^{-1}$ : $Si\text{-}O\text{-}CH_3$
1260 $cm^{-1}$ : $Si\text{-}CH_3$
1470, 2856 and 2924 $cm^{-1}$ : C-H
1597 $cm^{-1}$ : C-N
3319 $cm^{-1}$ : N-H

$^1H$-NMR spectrum
(internal standard, benzene, $\delta$ = 7.24 ppm)

$\delta$ = 0.00 ppm (s, 6H) : $Si\text{-}C\underline{H}_3$
$\delta$ = 3.45 ppm (s, 3H) : $Si\text{-}O\text{-}C\underline{H}_3$
$\delta$ = 0.20 - 0.71 ppm (m, 2H) : $Si\text{-}C\underline{H}_2\text{-}(CH_2)_{12}\text{-}CH_2\text{-}NH$
$\delta$ = 0.71 - 1.78 ppm (m, 31H) : $Si\text{-}CH_2\text{-}(C\underline{H}_2)_{12}\text{-}CH_2\text{-}NH$
$NH\text{-}CH_2\text{-}(C\underline{H}_2)_2\text{-}CH_2\text{-}NH_2$
$N\underline{H}\text{-}CH_2\text{-}(CH_2)_2\text{-}CH_2\text{-}N\underline{H}_2$
$\delta$ = 2.25 - 2.88 ppm (m, 6H) : $Si\text{-}CH_2\text{-}(CH_2)_{12}\text{-}C\underline{H}_2\text{-}NH\text{-}C\underline{H}_2\text{-}(CH_2)_2\text{-}C\underline{H}_2\text{-}NH_2$

Application Example.

Four surface-treated silica filler samples A, B, C and D were prepared each by admixing 500 g of a fumed silica filler with a solution prepared by dissolving 5 g of each of the liquid products obtained in Examples 5, 6 and 7 for the silica filler samples A, B and C, respectively, and 5 g of N-(2-aminoethyl)-3-aminopropyl trimethoxy silane for the silica filler sample D in a mixture of 20 g of deionized water and 475 g of methyl alcohol followed by drying in a vacuum drying oven at 100 °C for 5 hours.

Four molding compositions I, II, III and IV were each prepared by uniformly blending, on a two-roller mill, 36.07 parts by weight of a phenol resin, 63.93 parts by weight of an epoxy resin, 1.0 part by weight of carnauba wax, 0.70 part by weight of triphenyl phosphine and 300 parts by weight of the surface-treated silica fillers A, B, C and D, respectively. Each of the molding compositions I to IV was injection-molded at 175 °C to give test pieces having dimensions of 80 mm by 10 mm by 4 mm.

These test pieces were subjected to the pressure-cooker test by heating in water at 120 °C under a pressure of 2.1 atmospheres and the test pieces after water absorption in this way were subjected to measurement of flexural strength to give the results of 11.0, 10.5, 9.8 and 6.8 $kgf/mm^2$ for the molding compositions I, II, III and IV, respectively. These results clearly support the conclusion that the novel alkoxysilane compound of the invention can be an excellent surface-treatment agent for a silica filler for use as a water-resistant reinforcing filler of molding resin compositions.

## Claims

1. An alkoxysilane compound represented by the general formula

$$(R^1O)_mSi(CH_3)_{3-m}(R^2\text{-}Y),$$

in which $R^1$ is a methyl, ethyl or vinyl group, $R^2$ is a divalent aliphatic hydrocarbon group having 6 to 14 carbon atoms free from unsaturation, Y is a substituent selected from halogen atoms and aminoalkyl-substituted amino groups, in which the aminoalkyl group has 2 to 6 carbon atoms, and the subscript m is 1, 2 or 3.

2. An alkoxysilane compound as claimed in claim 1 in which the group denoted by $R^1$ is a methyl or ethyl group.

3. An alkoxysilane compound as claimed in claim 1 or claim 2 in which the substituent denoted by Y is a halogen atom.

4. An alkoxysilane compound as claimed in claim 3 in which the halogen is chlorine or bromine.

5. An alkoxysilane compound as claimed in claim 1 or claim 2 in which the substituent denoted by Y is an aminoalkyl-substituted amino group, in which the aminoalkyl group has 2 to 6 carbon atoms.

6. Use of an alkoxysilane compound as claimed in any one of the preceding claims as a priming or modifying agent for compositions comprising organic resins and for inorganic materials, and in particular as a surface-treatment agent for silicon fillers.

FIG. 1

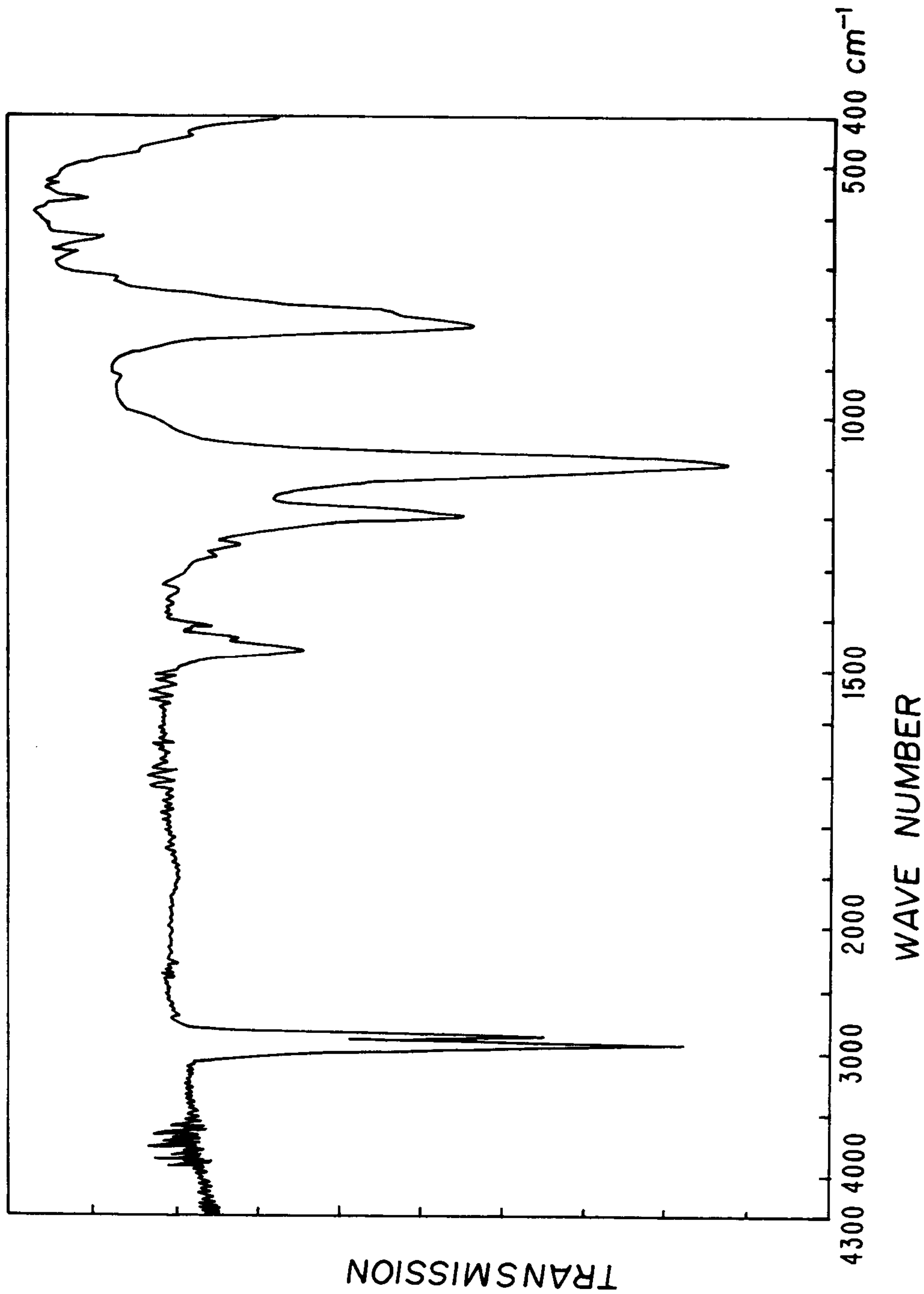
TRANSMISSION
WAVE NUMBER
4300
4000
3000
2000
1500
1000
500
400 $cm^{-1}$

FIG. 2

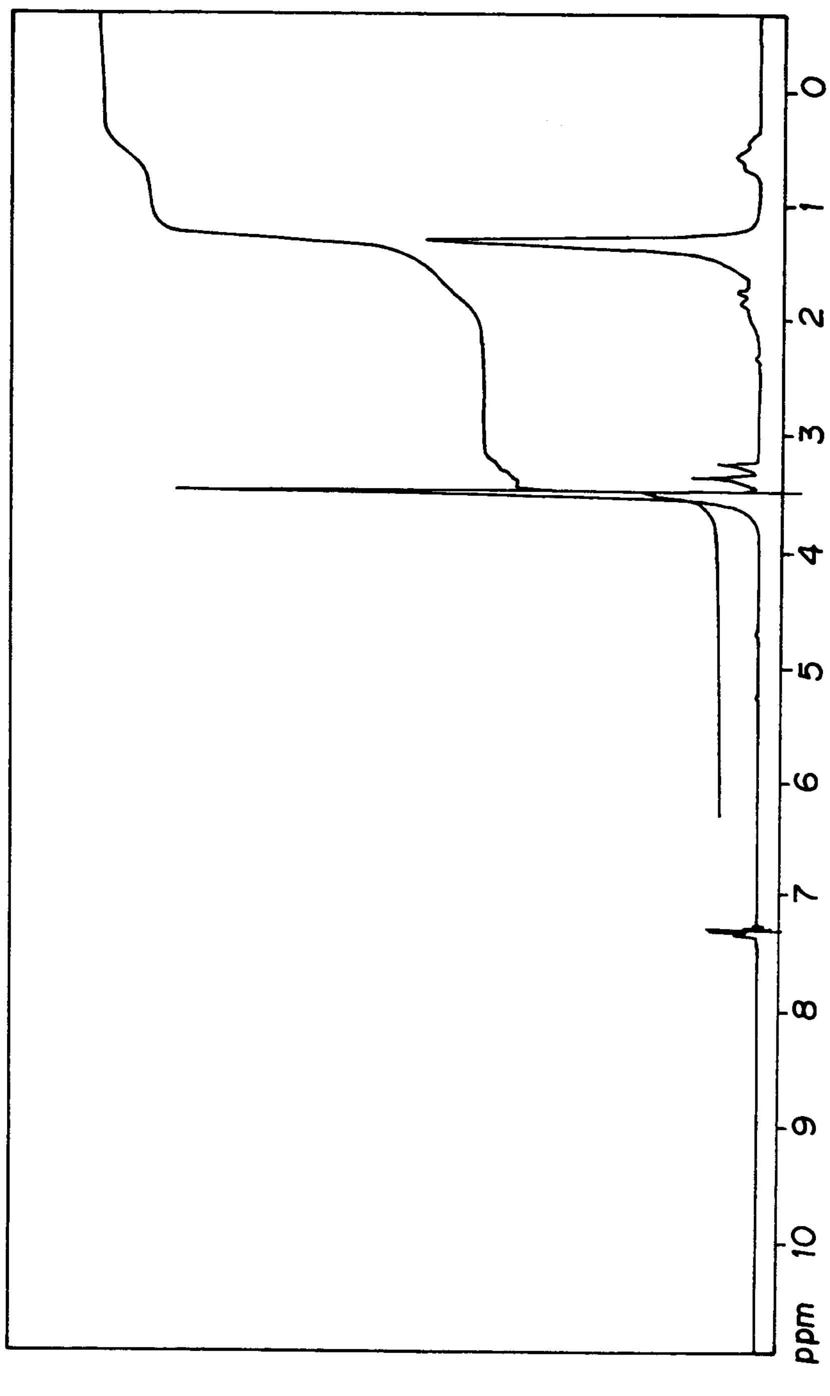

European Patent Office

# EUROPEAN SEARCH REPORT

Application Number

EP 91 31 0006

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 059 308 (IBM)<br>* claim 1 formula, examples 3-10 * | 1,2 | C07F7/18<br>C08K9/06 |
| X | CHEMICAL ABSTRACTS, vol. 111, no. 7, 14 August 1989, Columbus, Ohio, US; abstract no. 57845U, XIAO, CH. ET AL: 'Synthesis of omega-(aminoethylamino)undecyltrimethoxysilane' page 771 ;column 2 ; & HUAXUE SHIJI vol. 10, no. 3, 1988, pages 180 - 181; | 1-4 | |
| X | CHEMICAL ABSTRACTS, vol. 110, no. 25, 19 June 1989, Columbus, Ohio, US; abstract no. 231731V, XIAO, CH. ET AL: 'SILICONE SUPPORTED TRANSITION METAL COMPLEX CATALYSTS . . .' page 658 ;column 2 ; * abstract * & WUHAN DAXUE XUEBAO ZIRAN KEXUEBAN no. 1, 1988, pages 81 - 86; | 1-4 | TECHNICAL FIELDS SEARCHED (Int. Cl.5 )<br>C07F<br>C08K |
| A | EP-A-0 368 279 (NITTO BOSEKI CO ET AL)<br>* claim 7 * | 1,6 | |
| A | EP-A-0 264 022 (DOW CORNING CORPORATION)<br>* claim 3 * | 6 | |
| A | EP-A-0 176 062 (DOW CORNING CORPORATION)<br>* Claim 1 and page 4 paragraphe 3 * | 1 | |

The present search report has been drawn up for all claims

| Place of search | Date of completion of the search | Examiner |
|---|---|---|
| BERLIN | 27 JANUARY 1992 | KAPTEYN H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)